# EUROPÄISCHE PATENTSCHRIFT

(11) **EP 2 393 363 B1**
(45) Veröffentlichungstag und Bekanntmachung des Hinweises auf die Patenterteilung: **06.11.2013**
(21) Anmeldenummer: 10702064.6
(22) Anmeldetag: 29.01.2010
(51) Int. Cl.: A01N 43/80, A01P 1/00

(54) **VERWENDUNG VON EINEM SCHWEFELHALTIGEN HETEROAROMATISCHEN SÄUREANALOGON ALS EIN BAKTERIZID**
USE OF A SULFUROUS, HETEROAROMATIC ACID ANALOGUE AS A BACTERICIDE
UTILISATION D'UN ANALOGUE D'ACIDE HÉTÉROAROMATIQUE SULFUREUX COMME BACTÉRICIDE

(30) Priorität: 03.02.2009 EP 09151904
(43) Veröffentlichungstag der Anmeldung: 14.12.2011
(73) Patentinhaber: Bayer CropScience AG, 40789 Monheim (DE)
(72) Erfinder: ASSMANN, Lutz, 40764 Langenfeld (DE); MÜNKS, Karl-Wilhelm, 40667 Meerbusch (DE); DAVIES, Peter, Howard, Ayala Alabang Village 1780 Muntinlupa City (PH); BECKER, Rolf, Christian, 51399 Burscheid (DE); WETCHOLOWSKY, Ingo, 40764 Langenfeld (DE)
(86) Internationale Anmeldenummer: PCT/EP2010/000532
(87) Internationale Veröffentlichungsnummer: WO 2010/089055

(56) Entgegenhaltungen:
- EP-A- 0 976 326
- EP-A- 1 852 428
- WO-A-96/29871
- WO-A-99/24413
- DE-A1- 19 750 011
- US-A- 5 240 951
- DATABASE WPI Section Ch, Week 198134 Thomson Scientific, London, GB; Class C02, AN 1981-61138D XP002536098 & JP 56 081573 A (MEIJI SEIKA KAISHA) 3. Juli 1981 (1981-07-03)

## Beschreibung

Die vorliegende Erfindung betrifft die Verwendung der Verbindung der Formel I-15 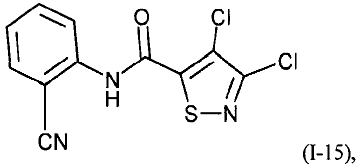 zur Bekämpfung von *Xanthomonadaceae* in Nutzpflanzen.

Außerdem betrifft die vorliegende Erfindung ein Verfahren zum Bekämpfen von *Xanthomonadaceae* in Nutzpflanzen durch deren Behandlung mit der Verbindung gemäß Formel (I-15).

Die Verbindung der Formel (I-15) ist unter anderem aus WO 99/024 413 bekannt.

EP 0 976 326 A, WO 96/29871 A und EP 1 852 428 A offenbaren 1,2,3-Thiadiazolderivate zur Bekämpfung von bakteriellen Schadorganismen in Nutzpflanzen, z.B. Reis. Dagegen betrifft die vorliegende Erfindung ein Isothiazol der Formel (I-15). JP56081573 A offenbart 4-isothiazolin-2-(2',6'-diethylphenyl)-3-one-1,1-dioxide, insbesondere zur Kontrolle des Reisbrandpilzes. DE 197 50 011 A1 (WO 99/24414 A1) offenbart Isothiazolderivate, die eine Ester oder Thioesterbindung anstelle der Amid-Bindung der Verbindung der Formel (I-15) aufweisen und deren Verwendung zur Kontrolle von unerwünschten Mikroorganismen und tierischen Schädlingen. US 5 240 951 A offenbart ein Isothiazolderivat zur Kontrolle des Reisbrandpilzes. Das Isothiazolderivat unterscheidet sich im Substituenten der Carbonylgruppe von der Verbindung der Formel (I-15). Eine bakterizide Verwendung der Verbindungen ist nicht offenbart.

Bakterien als Schaderreger in Nutzpflanzen treten unter anderem in gemäßigten oder feucht-warmen Klimaten auf und lösen dort Bakteriosen in einer Vielzahl von Nutzpflanzen aus, mit zum Teil erheblichen wirtschaftlichen Verluste. Beispielsweise kann der Befall mit *Erwinia*-Spezies zum Tode ganzer Obstplantagen wie Apfel oder Birne führen. Bekannt sind weiterhin die *Bacterial Soft Rot* in Kartoffel, Tumorbildung in Pflanzen durch den Befall mit Agrobakterien sowie eine Vielzahl von nekrotisch verlaufenden Krankheiten beim Befall von Getreiden wie Weizen oder Reis, Gemüse oder Zitrusfrüchte durch *Xanthomonas*-Spezies. Die Bakteriosen, die von *Pseudomonas*-Spezies insbesondere in Gemüse, Baumfrüchten und Tabak verursacht werden, gelten als besonders verheerend.

Fungizid wirkende Substanzen, deren Wirkmechanismus auf der Beeinflussung pilzspezifischer, metabolischer Prozesse beruht, sind erwartungsgemäß nicht gegen Bakterien wirksam. Daher ist der Gebrauch von Antibiotika wie Streptomycin, Blasticidin S oder Kasugamycin im Prinzip der einzige effektive Weg zur Bekämpfung von Bakterien auch in Nutzpflanzen. Dieses Vorgehen wird aber nur selten praktiziert, da diese Antibiotika auf denselben Wirkmechanismen wie Antibiotika in der Human- und Veterinärmedizin beruhen und es daher große Vorbehalte gibt, die Antibiotika im Pflanzenschutz einzusetzen. Es wird eine Förderung der Resistenzbildung befürchtet, außerdem sind die meisten Antibiotika teuer und oft unter anderen nur durch biotechnologische Methoden zugänglich.

Es besteht daher ein großer Bedarf, breit wirksamer Methoden zur Bekämpfung bakterieller Krankheiten in Nutzpflanzen, die zudem mit einem geringen Substanzaufwand auskommen und zudem nicht die Pflanzen schädigen.

Es wurde nun gefunden, dass sich die Verbindung gemäß Formel (I-15) 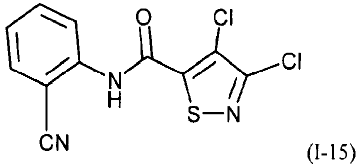 besonders zur Bekämpfung von *Xanthomonadaceae* in Nutzpflanzen eignet.

Ein erster Gegenstand der Erfindung ist daher die Verwendung von Verbindung I-15 zur Bekämpfung von *Xanthomonadaceae* in Nutzpflanzen.

Ein weiterer Gegenstand der Erfindung ist die Verwendung von Verbindung 1-15 zur Bekämpfung von *Xanthomonadaceae* in Reis.

Ein weiterer Gegenstand der Erfindung ist die Verwendung von Verbindung I-15 zur Bekämpfung von *Xanthomonas oryzae* in Reis.

Ein weiterer Gegenstand der Erfindung ist ein Verfahren zum Bekämpfen von *Xanthomonadaceae* in Nutzpflanzen, dadurch gekennzeichnet, dass man die Pflanzen mit Verbindung I-15 behandelt.

Ein weiterer Gegenstand der Erfindung ist ein Verfahren zum Bekämpfen von *Xanthomonas oryzae* in Nutzpflanzen, dadurch gekennzeichnet, dass man die Pflanzen mit Verbindung I-15 behandelt. Ein weiterer Gegenstand der Erfindung ist ein Verfahren zum Bekämpfen von *Xanthomonadaceae* in Reis, dadurch gekennzeichnet, dass man die Pflanzen mit Verbindung I-15 behandelt.

### Definitionen

Bakterielle Schadorganismen umfassen unter anderem Bakterien, die Schäden auf Pflanzen oder einem Pflanzenteil verursachen.

Bakterien umfassen unter anderem Actinobakterien und Proteobakterien.

Von besonderem Interesse ist dabei die Familie der *Xanthomonadaceae.*

Beispiele für phytopathogene Bakterien aus der Familie der *Xanthomonadaceae,* insbesondere in Kartoffel, Baumwolle, Tomate, Weizen, Gerste, Reis, Sojabohne, Zitrusfrüchten etc sind
*Xanthomonas axonopodis*
*Xanthomonas axonopodis* pv. *glycines*
*Xanthomonas campestris*
*Xanthomonas campestris* pv. *armoraciae*
*Xanthomonas campestris* pv. *citrumelo*
*Xanthomonas campestris* pv. *citri*
*Xanthomonas campestris* pv. *glycines*
*Xanthomonas campestris* pv. *Holcicola*
*Xanthomonas campestris* pv. *malvacearum*
*Xanthomonas campestris* pv. *cucurbitae*
*Xanthomonas campestris* pv. *vesicatoria*
*Xanthomonas campestris* pv. *translucens*
*Xanthomonas campestris* pv. *Oryzae*
*Xanthomonas fragariae*
*Xanthomonas oryzae*
*Xanthomonas oryzae* pv. *oryzae*
*Xanthomonas oryzae* pv. *Oryzicola*
*Xanthomonas translucens*
*Xanthomonas translucens* pv. *Translucens*

Die Verbindung gemäß Formel (I-15) kann gegebenenfalls als Mischungen verschiedener möglicher isomerer Formen, insbesondere von Stereoisomeren, wie optischen Isomeren vorliegen.

Die Verbindung gemäß Formel (I-15) kann also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im allgemeinen von 1 bis 10 Tage, vorzugsweise 1 bis 7 Tage nach der Behandlung der Pflanzen mit den Wirkstoffen. Je nach Applikationsform kann die Zugänglichkeit der Wirkstoffe zur Pflanze gezielt gesteuert werden.

Die gute Pflanzenverträglichkeit der Verbindung gemäß Formel (I-15) in den zur Bekämpfung von Pflanzenkrankheiten notwendigen Konzentrationen erlaubt eine Behandlung von ober- und unterirdischen Pflanzenteilen, von Pflanzgut, und des Bodens.

Die Verbindung gemäß Formel (1-15) eignet sich auch zur Steigerung des Ernteertrages, ist mindertoxisch und weist eine gute Pflanzenverträglichkeit auf.

Im Zusammenhang mit der vorliegenden Erfindung wurde eine vorteilhafte Wirkung bei der Ausbringung auf Pflanzen beobachtet.

Erfindungsgemäß können alle Pflanzen behandelt werden. Unter Pflanzen werden hierbei alle Pflanzenteile und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können einschließlich der transgenen Pflanzen und einschließlich der durch Sortenschutzrechte schützbaren oder nicht schützbaren Pflanzensorten. Solche Methoden sind beispielsweise Doppelt-Haploide, Protoplastenfusion, zufällige oder gerichtete Mutagenese sowie molekulare oder genetische Marker.

Unter Pflanzenteilen sollen alle oberirdischen und unterirdischen Teile und Organe der Pflanzen, wie Staude, Scheinstamm, Spross, Blatt, Hochblatt, Blattscheiden, Blattstiel, Blattspreite, Blüte und Wurzel verstanden werden, wobei beispielhaft Blätter, Nadeln, Stängel, Stämme, Blüten, Fruchtkörper, Früchte, Büschel und Samen sowie Wurzeln, Knollen, Rhizome, Schösslinge, Wurzelschösslinge aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Wie bereits oben erwähnt, können erfindungsgemäß alle Pflanzen behandelt werden. In einer bevorzugten Ausführungsform werden wild vorkommende oder durch konventionelle biologische Zuchtmethoden, wie Kreuzung, Meristemkulturen, Mikropropagation, somatische Embryogenese, direkte Organogenese oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) behandelt, wie zum Beispiel Transformation mittels Agrobacterium oder Particle Bombardment von embryogenen Zellen sowie Mikropropagation. Unter Pflanzen fallen alle Pflanzenteile wie oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Rassen, Bio- und Genotypen sein.

Als Pflanzen, welche erfindungsgemäß behandelt werden können, seien folgende erwähnt: Baumwolle, Flachs, Weinrebe, Obst, Gemüse, wie *Rosaceae sp.* (beispielsweise Kernfrüchte wie Apfel und Birne, aber auch Steinfrüchte wie Aprikosen, Kirschen, Mandeln und Pfirsiche und Beerenfrüchte wie Erdbeeren), *Ribesioidae sp.*, *Juglandaceae sp.*, *Betulaceae sp.*, *Anacardiaceae sp.*, *Fagaceae sp.*, *Moraceae sp.*, *Oleaceae sp.*, *Actinidaceae sp.*, *Lauraceae sp.*, *Musaceae sp.* (beispielsweise Bananenbäume und -plantagen), *Rubiaceae sp.* (beispielsweise Kaffee), *Theaceae sp.*, *Sterculiceae sp.*, *Rutaceae sp.* (beispielsweise Zitronen, Organen und Grapefruit); *Solanaceae sp.* (beispielsweise Tomaten, Kartoffeln), *Liliaceae sp.*, *Asteraceae sp.* (beispielsweise Salat), *Umbelliferae sp., Cruciferae sp., Chenopodiaceae sp., Cucurbitaceae sp.* (beispielsweise Gurke, Kürbis), *Alliaceae sp.* (beispielsweise Lauch, Zwiebel), *Papilionaceae sp.* (beispielsweise Erbsen); Hauptnutzpflanzen, wie *Gramineae sp.* (beispielsweise Mais, Rasen, Getreide wie Weizen, Roggen, Reis, Gerste, Hafer, Hirse und Triticale), *Asteraceae sp.* (beispielsweise Sonnenblume), *Brassicaceae sp.* (beispielsweise Weißkohl, Rotkohl, Brokkoli, Blumenkohl, Rosenkohl, Pak Choi, Kohlrabi, Radieschen sowie Raps, Canola, Senf, Meerrettich und Kresse), *Fabacae sp.* (beispielsweise Bohne, Erdnüsse), *Papilionaceae sp.* (beispielsweise Sojabohne), *Solanaceae sp.* (beispielsweise Kartoffeln), *Chenopodiaceae sp.* (beispielsweise Zuckerrübe, Futterrübe, Mangold, Rote Rübe); Nutzpflanzen und Zierpflanzen in Garten und Wald; sowie jeweils genetisch modifizierte Arten dieser Pflanzen.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Das erfindungsgemäße Behandlungsverfahren kann für die Behandlung von genetisch modifizierten Organismen (GMOs), z.B. Pflanzen oder Samen, verwendet werden. Genetisch modifizierte Pflanzen (oder transgene Pflanzen) sind Pflanzen, bei denen ein heterologes Gen stabil in das Genom integriert worden ist. Der Begriff "heterologes Gen" bedeutet im wesentlichen ein Gen, das außerhalb der Pflanze bereitgestellt oder assembliert wird und das bei Einführung in das Zellkerngenom, das Chloroplastengenom oder das Mitochondriengenom der transformierten Pflanze dadurch neue oder verbesserte agronomische oder sonstige Eigenschaften verleiht, dass es ein interessierendes Protein oder Polypeptid exprimiert oder dass es ein anderes Gen, das in der Pflanze vorliegt bzw. andere Gene, die in der Pflanze vorliegen, herunterreguliert oder abschaltet (zum Beispiel mittels Antisense-Technologie, Cosuppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

In Abhängigkeit von den Pflanzenarten oder Pflanzensorten, ihrem Standort und ihren Wachstumsbedingungen (Böden, Klima, Vegetationsperiode, Ernährung) kann die erfindungsgemäße Behandlung auch zu überadditiven ("synergistischen") Effekten führen. So sind zum Beispiel die folgenden Effekte möglich, die über die eigentlich zu erwartenden Effekte hinausgehen: verringerte Aufwandmengen und/oder erweitertes Wirkungsspektrum und/oder erhöhte Wirksamkeit der Wirkstoffe und Zusammensetzungen, die erfindungsgemäß eingesetzt werden können, besseres Pflanzenwachstum, erhöhte Toleranz gegenüber hohen oder niedrigen Temperaturen, erhöhte Toleranz gegenüber Trockenheit oder Wasser- oder Bodensalzgehalt, erhöhte Blühleistung, Ernteerleichterung, Reifebeschleunigung, höhere Erträge, größere Früchte, größere Pflanzenhöhe, intensiver grüne Farbe des Blatts, frühere Blüte, höhere Qualität und/oder höherer Nährwert der Ernteprodukte, höhere Zuckerkonzentration in den Früchten, bessere Lagerfähigkeit und/oder Verarbeitbarkeit der Ernteprodukte.

In gewissen Aufwandmengen kann die Verbindung gemäß Formel (I-15) auch eine stärkende Wirkung auf Pflanzen ausüben. Sie eignen sich daher für die Mobilisierung des pflanzlichen Abwehrsystems gegen Angriff durch mikrobiellen und tierischen Schadorganismen. Dies kann gegebenenfalls einer der Gründe für die erhöhte Wirksamkeit der erfindungsgemäßen Kombinationen sein, zum Beispiel gegen Pilze. Pflanzenstärkende (resistenzinduzierende) Substanzen sollen im vorliegenden Zusammenhang auch solche Substanzen oder Substanzkombinationen bedeuten, die fähig sind, das pflanzliche Abwehrsystem so zu stimulieren, dass die behandelten Pflanzen, wenn sie im Anschluss daran mit mikrobiellen und tierischen Schadorganismen inokuliert werde, einen beträchtlichen Resistenzgrad gegen diese mikrobiellen und tierischen Schadorganismen aufweisen. Die erfindungsgemäßen Substanzen lassen sich daher zum Schutz von Pflanzen gegen Angriff durch die erwähnten Pathogene innerhalb eines gewissen Zeitraums nach der Behandlung einsetzen. Der Zeitraum, über den eine Schutzwirkung erzielt wird, erstreckt sich im allgemeinen von 1 bis 10 Tagen, vorzugsweise 1 bis 7 Tagen, nach der Behandlung der Pflanzen mit den Wirkstoffen.

Zu Pflanzen und Pflanzensorten, die vorzugsweise erfindungsgemäß behandelt werden, zählen alle Pflanzen, die über Erbgut verfügen, das diesen Pflanzen besonders vorteilhafte, nützliche Merkmale verleiht (egal, ob dies durch Züchtung und/oder Biotechnologie erzielt wurde).

Pflanzen und Pflanzensorten, die ebenfalls vorzugsweise erfindungsgemäß behandelt werden, sind gegen einen oder mehrere biotische Stressfaktoren resistent, d. h. diese Pflanzen weisen eine verbesserte Abwehr gegen tierische und mikrobielle Schädlinge wie Nematoden, Insekten, Milben, phytopathogene Pilze, Bakterien, Viren und/oder Viroide auf. Bevorzugt sind dabei Musaceae zu nennen, die gegen phytopathogene Pilze oder Viren resistent sind.

Pflanzen und Pflanzensorten, die ebenfalls erfindungsgemäß behandelt werden können, sind solche Pflanzen, die gegen einen oder mehrere abiotische Stressfaktoren resistent sind. Zu den abiotischen Stressbedingungen können zum Beispiel Dürre, Kälte- und Hitzebedingungen, osmotischer Stress, Staunässe, erhöhter Bodensalzgehalt, erhöhtes Ausgesetzt Sein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls erfindungsgemäß behandelt werden können, sind solche Pflanzen, in den Vaccine oder therapeutische Proteine heterolog exprimiert werden. Dazu gehören zum Beispiel Hepatitis B Antigen.

Pflanzen und Pflanzensorten, die ebenfalls erfindungsgemäß behandelt werden können, sind solche Pflanzen, die durch erhöhte Ertragseigenschaften gekennzeichnet sind. Ein erhöhter Ertrag kann bei diesen Pflanzen z.B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Stress- und nicht-Stress-Bedingungen) beeinflusst werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Pflanzen, die erfindungsgemäß behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Stressfaktoren führt. Solche Pflanzen werden typischerweise dadurch erzeugt, dass man eine eingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z.B. beim Mais) durch Entfahnen (d. h. mechanischem Entfernen der männlichen Geschlechtsorgane bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, da man von den Hybridpflanzen ernten will, um die Samen handelt, ist es üblicherweise günstig, sicherzustellen, dass die Pollenfertilität in Hybridpflanzen, die die für die Pollensterilität verantwortlichen genetischen Determinanten enthalten, völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben. Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden.

Pflanzen oder Pflanzensorten (die mit Methoden der Pflanzenbiotechnologie, wie der Gentechnik, erhalten werden), die erfindungsgemäß behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidtolerante Pflanzen sind zum Beispiel glyphosatetolerante Pflanzen, d. h. Pflanzen, die gegenüber dem Herbizid Glyphosate oder dessen Salzen tolerant gemacht worden sind. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium *Salmonella typhimurium,* das CP4-Gen des Bakteriums *Agrobacterium sp.*, die Gene, die für eine EPSPS aus der Petunie, für eine EPSPS aus der Tomate oder für eine EPSPS aus Eleusine kodieren. Es kann sich auch um eine mutierte EPSPS handeln. Glyphosatetolerante Pflanzen können auch dadurch erhalten werden, dass man ein Gen exprimiert, das für ein Glyphosate-Oxidoreduktase-Enzym kodiert. Glyphosatetolerante Pflanzen können auch dadurch erhalten werden, dass man ein Gen exprimiert, das für ein Glyphosateacetyltransferase-Enzym kodiert. Glyphosatetolerante Pflanzen können auch dadurch erhalten werden, dass man Pflanzen, die natürlich vorkommende Mutationen der oben erwähnten Gene selektiert.

Sonstige herbizidresistente Pflanzen sind zum Beispiel Pflanzen, die gegenüber Herbiziden, die das Enzym Glutaminsynthase hemmen, wie Bialaphos, Phosphinotricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet. Solch ein wirksames entgiftendes Enzym ist zum Beispiel ein Enzym, das für ein Phosphinotricin-acetyltransferase kodiert (wie zum Beispiel das bar- oder pat-Protein aus Streptomyces-Arten). Pflanzen, die eine exogene Phosphinotricin-acetyltransferase exprimieren, sind beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei den Hydroxyphenylpyruvatdioxygenasen handelt es sich um Enzyme, die die Reaktion, in der para-Hydroxyphenylpyruvat (HPP) zu Homogentisat umgesetzt wird, katalysieren. Pflanzen, die gegenüber HPPD-Hemmern tolerant sind, können mit einem Gen, das für ein natürlich vorkommendes resistentes HPPD-Enzym kodiert, oder einem Gen, das für ein mutiertes HPPD-Enzym kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Prephenatdehydrogenase-Enzym kodiert.

Weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen. Die Herstellung von sulfonylharnstofftoleranten Pflanzen und imidazolinontoleranten Pflanzen ist in der internationalen Veröffentlichung WO 96/033270 beschrieben. Weitere sulfonylharnstoff- und imidazolinontolerante Pflanzen sind auch in z.B. WO 2007/024782 beschrieben.

Weitere Pflanzen, die gegenüber Imidazolinon und/oder Sulfonylharnstoff tolerant sind, können durch induzierte Mutagenese, Selektion in Zellkulturen in Gegenwart des Herbizids oder durch Mutationszüchtung erhalten werden.

Von besonderem Interesse ist hierbei als Spezies Reis, die die oben genannten Herbizidtoleranzen aufweist.

Von besonderem Interesse ist die Verwendung der erfindungsgemäßen Verbindungen auf Reis, die das Integrationsereignis CL121, CL141, CFX51, IMINTA-!, IMINTA-4, LLRICE06, LLRICE62, LLRICE601 und PWC16 enthalten.

Pflanzen oder Pflanzensorten (die nach Methoden der pflanzlichen Biotechnologie, wie der Gentechnik, erhalten wurden), die ebenfalls erfindungsgemäß behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfasst im vorliegenden Zusammenhang jegliche Pflanze, die mindestens ein Transgen enthält, das eine Kodiersequenz umfasst, die für folgendes kodiert:
1) ein insektizides Kristallprotein aus *Bacillus thuringiensis* oder einen insektiziden Teil davon, wie die insektiziden Kristallproteine, die online bei: http://www.lifesci.sussex.ac.uk/Home/Neil_Crickmore/Bt/ beschrieben sind, zusammengestellt wurden, oder insektizide Teile davon, z.B. Proteine der Cry-Proteinklassen Cry1Ab, Cry1Ac, Cry1F, Cry2Ab, Cry3Ae oder Cry3Bb oder insektizide Teile davon; oder
2) ein Kristallprotein aus *Bacillus thuringiensis* oder einen Teil davon, der in Gegenwart eines zweiten, anderen Kristallproteins als *Bacillus thuringiensis* oder eines Teils davon insektizid wirkt, wie das binäre Toxin, das aus den Kristallproteinen Cy34 und Cy35 besteht; oder
3) ein insektizides Hybridprotein, das Teile von zwei unterschiedlichen insektiziden Kristallproteinen aus *Bacillus thuringiensis* umfaßt, wie zum Beispiel ein Hybrid aus den Proteinen von 1) oben oder ein Hybrid aus den Proteinen von 2) oben, z.B. das Protein Cry1A.105, das von dem Mais-Event MON98034 produziert wird (WO 2007/027777); oder
4) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden, wie das Protein Cry3Bb1 in Mais-Events MON863 oder MON88017 oder das Protein Cry3A im Mais-Event MIR 604;
5) ein insektizides sezerniertes Protein aus *Bacillus thuringiensis* oder *Bacillus cereus* oder einen insektiziden Teil davon, wie die vegetativ wirkenden insektentoxischen Proteine (vegetative insecticidal proteins, VIP), die unter http://www.lifesci.sussex.ac.uk/Home/Neil_Crickmore/Bt/vip.html angeführt sind, z.B. Proteine der Proteinklasse VIP3Aa; oder
6) ein sezerniertes Protein aus *Bacillus thuringiensis* oder *Bacillus cereus,* das in Gegenwart eines zweiten sezernierten Proteins aus *Bacillus thuringiensis* oder *B. cereus* insektizid wirkt, wie das binäre Toxin, das aus den Proteinen VIP1A und VIP2A besteht.
7) ein insektizides Hybridprotein, das Teile von verschiedenen sezernierten Proteinen von *Bacillus thuringiensis* oder *Bacillus cereus* umfaßt, wie ein Hybrid der Proteine von 1) oder ein Hybrid der Proteine von 2) oben; oder
8) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden (wobei die Kodierung für ein insektizides Protein erhalten bleibt), wie das Protein VIP3Aa im Baumwoll-Event COT 102.

Natürlich zählt zu den insektenresistenten transgenen Pflanzen im vorliegenden Zusammenhang auch jegliche Pflanze, die eine Kombination von Genen umfasst, die für die Proteine von einer der oben genannten Klassen 1 bis 8 kodieren. In einer Ausführungsform enthält eine insektenresistente Pflanze mehr als ein Transgen, das für ein Protein nach einer der oben genannten 1 bis 8 kodiert, um das Spektrum der entsprechenden Zielinsektenarten zu erweitern oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Pflanzen oder Pflanzensorten (die nach Methoden der pflanzlichen Biotechnologie, wie der Gentechnik, erhalten wurden), die ebenfalls erfindungsgemäß behandelt werden können, sind gegenüber abiotischen Stressfaktoren tolerant. Solche Pflanzen können durch genetische Transformation oder durch Selektion von Pflanzen, die eine Mutation enthalten, die solch eine Stressresistenz verleiht, erhalten werden. Zu besonders nützlichen Pflanzen mit Stresstoleranz zählen folgende:
a. Pflanzen, die ein Transgen enthalten, das die Expression und/oder Aktivität des Gens für die Poly(ADP-ribose)polymerase (PARP) in den Pflanzenzellen oder Pflanzen zu reduzieren vermag.
b. Pflanzen, die ein stresstoleranzförderndes Transgen enthalten, das die Expression und/oder Aktivität der für PARG kodierenden Gene der Pflanzen oder Pflanzenzellen zu reduzieren vermag;
c. Pflanzen, die ein stresstoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotidadenyltransferase, Nicotinamidadenindinukleotidsynthetase oder Nicotinamidphosphoribosyltransferase.

### Applikationsformen

Die erfindungsgemäße Behandlung der Pflanzen und Pflanzenteile sowie des Vermehrungsmaterials mit einer Verbindung ausgewählt aus den Verbindungen gemäß Formel (I-15) erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren.

In einer besonders bevorzugten Ausführungsform der vorliegenden Erfindung wird eine Verbindung ausgewählt aus den Verbindungen gemäß Formel (I-15) oder deren Formulierungen zur Granulatapplikation, zur Pflanzgutbehandlung oder zur Rhizom- oder Blattapplikation verwendet.

Die Verbindung ausgewählt aus den Verbindungen gemäß Formel (I-15) kann in Abhängigkeit von ihren jeweiligen physikalischen und/ oder chemischen Eigenschaften in die üblichen Formulierungen überführt werden, wie Lösungen, Emulsionen, Suspensionen, Pulver, Schäume, Pasten, Granulate, Sachets, Aerosole, Feinstverkapselungen in polymeren Stoffen sowie ULV-Kalt- und Warmnebel-Formulierungen.

Diese Formulierungen werden in bekannter Weise hergestellt, z.B. durch Vermischen der Verbindungen gemäß Formel (I-15) mit Streckmitteln, also flüssigen Lösungsmitteln, unter Druck stehenden verflüssigten Gasen und/ oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im Wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser sowie mineralische, tierische als auch vegetabile Öle wie zum Beispiel Palmöl oder andere Öle aus Pflanzensamen. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Bims, Marmor, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier und/oder schaumerzeugende Mittel kommen infrage: z.B. nichtionogene, kationische und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Bekämpfung von bakteriellen Schadorganismen durch die Behandlung des Pflanzguts von Pflanzen ist seit langem bekannt und ist Gegenstand ständiger Verbesserungen. Dennoch ergeben sich bei der Behandlung von gut eine Reihe von Problemen, die nicht immer zufrieden stellend gelöst werden können. So ist es erstrebenswert, Verfahren zum Schutz des Pflanzguts und der keimenden Pflanze zu entwickeln, die das zusätzliche Ausbringen von Pflanzenschutzmitteln nach der Pflanzung oder nach dem Auflaufen der Pflanzen überflüssig machen oder zumindest deutlich verringern. Es ist weiterhin erstrebenswert, die Menge des eingesetzten Wirkstoffs dahingehend zu optimieren, dass das Pflanzgut und die keimende Pflanze vor dem Befall durch bakterielle Schadorganismen bestmöglich geschützt wird, ohne jedoch die Pflanze selbst durch den eingesetzten Wirkstoff zu schädigen. Insbesondere sollten Verfahren zur Behandlung von Pflanzgut auch die intrinsischen Eigenschaften transgener Pflanzen einbeziehen, um einen optimalen Schutz des Pflanzguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Pflanzgut und keimenden Pflanzen vor dem Befall mit bakteriellen Schadorganismen der Familie der *Xanthomonadaceae*, indem das Saat- sowie Pflanzgut mit einem erfindungsgemäßen Mittel, das die Verbindung (I-15) enthält, behandelt wird.

Die Erfindung bezieht sich ebenfalls auf die Verwendung der erfindungsgemäßen Mittel, das die Verbindung (I-15) enthält, zur Behandlung von Pflanzgut zum Schutz des Pflanzguts und der keimenden Pflanze vor bakteriellen Schadorganismen der Familie der *Xanthomonadaceae*.

Einer der Vorteile der vorliegenden Erfindung ist es, dass aufgrund der besonderen systemischen Eigenschaften der erfindungsgemäßen Mittel, das die Verbindung (I-15) enthält, die Behandlung des Pflanzguts mit diesen Mitteln nicht nur das Pflanzgut selbst, sondern auch die daraus hervorgehenden Pflanzen nach dem Auspflanzen vor bakteriellen Schadorganismen schützt. Auf diese Weise kann die unmittelbare Behandlung der Kultur zum Zeitpunkt der Auspflanzung oder kurz danach entfallen.

Ebenso ist es als vorteilhaft anzusehen, dass die Mittel, das die Verbindung (I-15) enthält, insbesondere auch bei transgenem Pflanzgut eingesetzt werden können.

Die Mittel, das die Verbindung (I-15) enthält, eignen sich zum Schutz von Pflanzgut jeglicher Pflanzensorte, die in der Landwirtschaft, im Gewächshaus, in Forsten oder im Gartenbau eingesetzt wird. Insbesondere handelt es sich dabei um Pflanzgut von Getreiden wie Weizen, Gerste, Roggen, Hafer, Mais, Reis, Triticale wie auch Baumwolle, Soja, Raps und Canola, Gemüse wie Gurken, Kürbis etc.

Im Rahmen der vorliegenden Erfindung wird das Mittel, das die Verbindung (I-15) enthält, alleine oder in einer geeigneten Formulierung auf das Pflanzgut aufgebracht. Vorzugsweise wird das Pflanzgut in einem Zustand behandelt, in dem so stabil ist, dass keine Schäden bei der Behandlung auftreten. Im Allgemeinen kann die Behandlung des Pflanzguts zu jedem Zeitpunkt zwischen der Ernte und der Auspflanzung erfolgen. Üblicherweise wird Pflanzgut verwendet, das von der Pflanze getrennt und von Kolben, Schalen, Stängeln, Hülle, Wolle oder Fruchtfleisch befreit wurde.

Im Allgemeinen muss bei der Behandlung des Pflanzguts darauf geachtet werden, dass die Menge des auf das Pflanzgut aufgebrachten Mittels, das die Verbindung (I-15) enthält, und/oder weiterer Zusatzstoffe so gewählt wird, dass die Keimung des Pflanzguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die Mittel, das die Verbindung (I-15) enthält, können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Pflanzgut aufzubringen. Geeignete Formulierungen und Verfahren für die Saat- sowie Pflanzgutbehandlung sind dem Fachmann bekannt.

Die erfindungsgemäß verwendbaren Verbindungen ausgewählt aus gemäß Formel (1-15) können in die üblichen Formulierungen überführt werden, wie Lösungen, Emulsionen, Suspensionen, Pulver, Schäume sowie ULV-Formulierungen.

Diese Formulierungen werden in bekannter Weise hergestellt, indem man die Verbindungen ausgewählt aus den Verbindungen der Klasse A mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline, mineralische und vegetabile Öle und auch Wasser.

Als Farbstoffe, die in den erfindungsgemäß verwendbaren Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den erfindungsgemäß verwendbaren Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutyl-naphthalin-Sulfonate.

Als Dispergiermittel und/oder Emulgatoren, die in den erfindungsgemäß verwendbaren Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Aryl-sulfonat-Formaldehydkondensate.

Als Entschäumer können in den erfindungsgemäß verwendbaren Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Formulierungen enthalten sein können, kommen vorzugsweise Gibberelin A1, Gibberelin A3 (Gibberelinsäure), Gibberelin A4, Gibberelin A A7. Besonders bevorzugt ist die Gibberlinsäure.

Die Gibberelline sind bekannt (vgl. R. Wegler "Chemie der Pflanzenschutz- und Schädlingsbekämpfungsmittel", Band 2, Springer Verlag, Berlin-Heidelberg-New York, 1970, Seiten 401 - 412).

Die erfindungsgemäß verwendbaren Formulierungen können entweder direkt oder nach vorherigem Verdünnen mit Wasser zur Behandlung von Saatgut der verschiedensten Art eingesetzt werden. So lassen sich die Konzentrate oder die daraus durch Verdünnen mit Wasser erhältlichen Zubereitungen einsetzen zur Beizung des Saatgutes. Die erfindungsgemäß verwendbaren Formulierungen oder deren verdünnte Zubereitungen können auch zum Behandeln von Pflanzgut transgener Pflanzen eingesetzt werden. Dabei können im Zusammenwirken mit den durch Expression gebildeten Substanzen auch zusätzliche synergistische Effekte auftreten.

Die Aufwandmenge an den erfindungsgemäß verwendbaren Formulierungen kann innerhalb eines größeren Bereiches variiert werden. Sie richtet sich nach dem jeweiligen Gehalt der Wirkstoffe in den Formulierungen und nach dem Pflanzgut. Die Aufwandmengen an Wirkstoff liegen im Allgemeinen zwischen 0,001 und 50 g pro Kilogramm Pflanzgut, vorzugsweise zwischen 0,01 und 15 g pro Kilogramm Pflanzgut.

### Mischungen

Eine Verbindung ausgewählt aus den Verbindungen gemäß Formel (I-15) kann als solches oder in Formulierungen auch in Mischung mit bekannten Fungiziden, Bakteriziden, Akariziden, Nematiziden, Herbiziden, Insektiziden, Safenern, Produkten zur Bodenverbesserung oder zur Reduktion von Pflanzenstress, z.B. Myconate, verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Erfindungsgemäß bedeutet der Ausdruck "Mischung" verschiedene mögliche Kombinationen von wenigstens zwei der oben genannten Wirkstoffe, wie beispielsweise Fertigmischungen, Tankmischungen (worunter Spritzmischungen verstanden werden, die vor der Anwendung aus den Formulierungen der Einzelwirkstoffe durch Zusammengeben und Verdünnen hergestellt werden) oder Kombinationen hiervon (z.B. wird eine binäre Fertigmischung aus zwei der oben genannten Wirkstoffen mit einer Formulierung der dritten Einzelsubstanz in eine Tankmischung überführt). Erfindungsgemäß können die Einzelwirkstoffe auch sequentiell eingesetzt werden, d.h. einer nach dem anderen, und zwar mit einem vernünftigen zeitlichen Abstand von wenigen Stunden oder Tagen, bei Saatgutbehandlung z.B. auch durch Aufbringen mehrerer Schichten, die unterschiedliche Wirkstoffe enthalten. Vorzugsweise spielt es keine Rolle, in welcher Reihenfolge die einzelnen Wirkstoffe eingesetzt werden können.

Die Verbindungen gemäß Formel (I-15) können als solche, in Form ihrer Formulierungen oder den daraus bereiteten Anwendungsformen, wie gebrauchsfertige Lösungen, Suspensionen, Spritzpulver, Pasten, lösliche Pulver, Stäubemittel und Granulate angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Verbindungen gemäß Formel (I-15) nach dem Ultra-Low-Volume-Verfahren auszubringen oder die Wirkstoffzubereitung oder den Wirkstoff selbst in den Boden zu injizieren. Es kann auch das Pflanzgut der Pflanzen behandelt werden.

Beim Einsatz einer Verbindung ausgewählt aus den Verbindungen gemäß Formel (I-15) können die Aufwandmengen je nach Applikationsart innerhalb eines größeren Bereiches variiert werden. Bei der Behandlung von Pflanzenteilen liegen die Aufwandmengen an Wirkstoff im allgemeinen zwischen 0,1 und 10.000 g/ha, vorzugsweise zwischen 10 und 1.000 g/ha. Bei der Pflanzgutbehandlung liegen die Aufwandmengen an Wirkstoff im allgemeinen zwischen 0,001 und 50g pro Kilogramm Pflanzgut, vorzugsweise zwischen 0,01 und 10 g pro Kilogramm Pflanzgut. Bei der Behandlung des Bodens liegen die Aufwandmengen an Wirkstoff im allgemeinen zwischen 0,1 und 10.000 g/ha, vorzugsweise zwischen 1 und 5.000 g/ha.

Die gute bakterizide Wirkung wird durch das folgende Beispiel veranschaulicht.

### Beispiel: Xanthomonas campestris pv. Oryzae in Reis

Auf den Philippinen (Versuchstation Calauan) wurde ein Parzellenversuch mit der Reissorte "Mestizo" angelegt, um die Wirkung der Verbindung gegen Bakterien *Xanthomonas campestris pv. Oryzae* in der Spritzanwendung unter landwirtschaftlichen Bedingungen zu überprüfen.

Die zu prüfenden Produkte wurden in Form von sequentiellen Spritzfolgen auf die Pflanzen gespritzt.

Die Zeiträume zwischen den einzelnen Spritzungen variierten zwischen 2 - 3 Wochen.

Die Verbindung I-15 gemäß Tabelle 1 wurde in der Formulierung 200 appliziert und mit einem international verfügbaren Referenzprodukt (Produktname Shirahagen, Wirkstoff Techlofthalan (JP-B 56140903), 10 WP) in den in Tabelle 2 unten angegebenen Aufwandmengen verglichen. Das Spritzvolumen bei der Anwendung betrug 300 l Wasser je Hektar.

30 Tage nach der zweiten Spritzung wurde der Bekämpfungserfolg ausgewertet. Die Bonitur erfolgte durch visuelle Schätzung des Befallsgrades an Blättern in Teilstücken der Parzelle. Der Wirkungsgrad wurde danach gemäß der Abbottformel (Abbott, J. Econ. Entomol. (1925), 18, pp 265-267) errechnet.

Die Befallszahlen sind in der folgenden Tabelle 2 zu entnehmen:

**Tab.2 Wirkung von Verbindung I-15 gegen Xanthomonas campestris pv. Oryzae in Reis**

| | | Befallsgrad (%) | |
|---|---|---|---|
| | | (Zweitoberstes Blatt - Fahnenblatt) | Wirkungsgrad |
| | | 30 Tage nach der 2. Spritzung | (% Abbott) |
| Behandlungsvariante | Dosis Wirkstoff (g Wirkstoff./ha) | | |
| Unbehandelte Kontrolle | | 16 | |
| Verbindung I-15 | 200 | 1 | 91 |
| Shirahagen | | | |
| (Wirkstoff Techlofthalan) | 200 | 8 | 53 |

## Patentansprüche

1. Verfahren zum Bekämpfen von *Xanthomonadaceae* in Nutzpflanzen, **dadurch gekennzeichnet, dass** man die Pflanzen mit Verbindung I-15 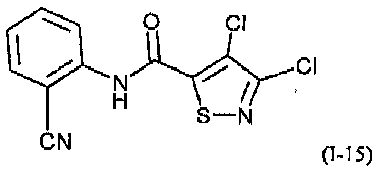 behandelt.

2. Verfahren gemäß Anspruch 1, wobei die behandelten Pflanzen transgene Pflanzen sind.

## Claims

1. Method for controlling *Xanthomonadaceae* in useful plants, **characterized in that** the plants are treated with compound I-15

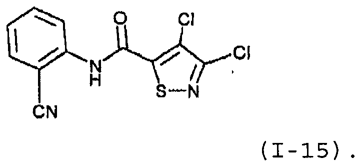

2. Method according to Claim 1 where the treated plants are transgenic plants.

## Revendications

1. Procédé pour la lutte contre des *Xanthomonadaceae* chez des plantes utiles, **caractérisé en ce qu'**on traite les plantes par le composé I-15

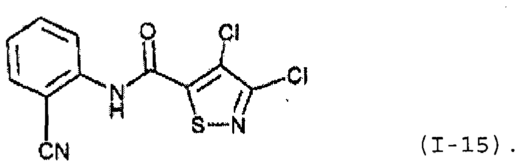

2. Procédé selon la revendication 1, **caractérisé en ce que** les plantes traitées sont des plantes transgéniques.
